# EUROPEAN PATENT SPECIFICATION

(11) **EP 1 010 183 B1**
(45) Date of publication and mention of the grant of the patent: **03.09.2003**
(21) Application number: 97905546.4
(22) Date of filing: 21.02.1997
(51) Int. Cl.: G21C 3/20

(54) **A COMPONENT DESIGNED FOR USE IN A LIGHT WATER REACTOR, A METHOD OF PRODUCING A LAYER, AND USE OF A COMPONENT**
KOMPONENTE ZUR VERWENDUNG IN EINEM LEICHTWASSERREAKTOR,EIN VERFAHREN ZUR HERSTELLUNG EINER SCHICHT UND VERWENDUNG DER KOMPONENTE
COMPOSANT DESTINE A ETRE UTILISE DANS UN REACTEUR A EAU LEGERE, PROCEDE D'ELABORATION D'UNE COUCHE ET UTILISATION DE CE COMPOSANT

(30) Priority: 23.02.1996 SE 9600699
(43) Date of publication of application: 21.06.2000
(73) Proprietor: Westinghouse Atom AB, 721 63 Västeras (SE)
(72) Inventor: ARBELL, Magnus, S-722 14 Västeras (SE); HEDENQVIST, Per, S-756 45 Uppsala (SE); STRIDH, Bengt, S-725 91 Västeras (SE)
(74) Representative: Berglund, Stefan
(86) International application number: SE9700297
(87) International publication number: WO97031376

(56) References cited:
- EP-A- 0 511 035
- SE-B- 433 141
- US-A- 4 188 458
- US-A- 4 659 540
- US-A- 5 026 517
- US-A- 5 227 129
- US-A- 5 301 211

## Description

### THE FIELD OF THE INVENTION AND PRIOR ART

The present invention relates to a component designed for use in a light water nuclear reactor and which, during the use thereof, is in contact with water, water steam or a combination thereof, the component at least partly being comprised by a metal and/or a metal alloy and the surface of the component being provided with a thin coating provided to prevent the water and/or the water steam from getting into contact with the metal and/or the metal alloy. The invention also relates to a method of producing a thin coating onto a surface of a component designed for use in a light water reactor, the component at least partly being comprised by a metal and/or metal alloy, and the coating being provided to prevent water, water steam or a combination thereof from getting into contact with the metal and/or the metal alloy during use. The invention also relates to a use of such a component in a light water reactor.

Components that are in contact with water, water steam or a combination thereof in nuclear plants run the risk of being affected of at least one of oxidation, hydration, corrosion and wear. According to prior art, one way of protecting components from such an affection is to apply a coating onto the surface of the component. The requirements of such a coating are that it shall cover the surface of the component so well and be so impermeable that it prevents oxygen, hydrogen and compositions that could damage the surface when being in contact therewith from reaching said surface, and that the coating increases the resistance against wear. Accordingly, the coating shall protect the surface of the component against corrosion and against compositions that have a detrimental effect on the component, and prevent wear of the surface.

When the component is a cladding tube for fuel in a nuclear plant, a damage on the coating or a defect extending through the total thickness of the coating may imply that water, water steam or a combination thereof gets in contact with the metal surface of the cladding tube. The water, water steam or the combination thereof oxides the unprotected surface of the cladding tube, which may result in the formation of a damage through the total thickness of the cladding tube. At such a primary damage, the cooling medium gets in contact with the nuclear fuel which may then leak from the cladding tube to the primary cooling circuit, radioactivity being spread in the plant. The primary damage also implies that water, water steam or a combination thereof penetrates into the cladding tube in a space between the cladding tube and the nuclear fuel and is spread in said space along the inner periphery and the length of the cladding tube, and may thereby cause further damages on the cladding tube, so called secondary damages. These damages are often due to that the water, water steam or a combination thereof which has penetrated into the cladding as a result of the primary damage causes oxidation and a subsequent hydrogen formation. The hydrogen is absorbed by the cladding and the latter runs the risk of being hydrated in such a way that it is disintegrated at a plurality of sites. This in its turn results in the cladding tube obtaining a damage that extends through the full thickness of the tube and is initiated from the inner side. Such secondary damages may appear at large distances from the primary damage, and often have the shape of long cracks. At secondary damages the nuclear fuel also leaks out radioactive material to the primary cooling circuit.

Coatings of components in light water reactors according to prior art are normally comprised by one single, relatively thick layer of a material suitable for the purpose. An example of such a plant is described in US patent 5 026 517, the coating being comprised by one single layer of titanium carbide (TiC), titanium nitride (TiN) zirkonium nitride (ZrN), chromium carbide (CrC), titanium aluminium vanadium nitride (TiAIVN), tantalum nitride (TaN), zirkonium carbide (ZrC) or tungsten carbide (WC). US patent 5 227 129 shows an example of a method of producing a coating on the surface of a cladding tube for nuclear fuel, comprised by one single layer of zirkonium nitride (ZrN), by means of cathodic "Arc plasma" deposition. Furthermore, US patent 5 301 211 shows an example of a method of producing such a coating comprised by one single layer by sputter depositing the surface of a tube-shaped component.

Prior art also discloses coatings on an inner surface of cladding tubes for fuel in light water reactors, said coatings being comprised by an oxide layer closest to the metal surface, and a metal layer outside said oxide layer. Examples of such coatings are disclosed in US 4 284 660 , US 4 659 540 and US 4 343 659. In each case the metal layer is comprised by copper (Cu), the metal layer forming the very outer layer of the coating which is deposited at the inner surface of the cladding tube. These coatings are relatively thick and, above all, they have the task of protecting the cladding tube against stress corrosion.

Prior art also describes duplex-coatings on cladding tubes for nuclear fuel. These coatings are provided on an outer surface of the cladding tube and are relatively thick, approximately 50-70 µm. Primarily they are comprised by some sort of zircaloy or zirkonium with a low content of alloys, and have as their task to improve the corrosion resistance amongst others.

The problem of such coatings comprised by only one layer is that there is a significant risk of defects in the coating extending through the total thickness of the coating, in such a way that the underlying surface of the component is exposed to aggressive compositions and runs the risk of being damaged. Such defects also result in an easier scaling of the coating from the surface of the component at the area of the defect, the surface thereby becoming locally available for aggressive compositions and for wear. The scaling of the coating depends on the thickness of the coating. The thicker the coating, the larger the risk for scaling.

### SUMMARY OF THE INVENTION

The object of the present invention is to provide a coating which effectively protects the surface of the underlying component onto which it is applied against chemical, physical and mechanical action, in comparison to coatings according to prior art.

This object is obtained with the initially defined component which is characterized in that the coating comprises two or more layers, for example three layers, successively deposited and that the coating has a total thickness of 20 µm at maximum.

By creating a coating comprised by a plurality of layers one obtains the advantage of possible defects in the first layer, located closest to the surface of the component, being covered by a second layer, resulting in the risk of the coating containing defects that extend through the total thickness thereof being significantly reduced. The different layers of the coating may be accomplished by depositions of compounds with different compositions onto the surface of the component, the depositions being performed at different times and being performed at generally similar conditions and by means of generally identical methods by each deposition. The depositions at different times of compounds with a similar composition may be performed at different deposition conditions for different layers in the coating, and this may also take place by means of different deposition methods for the different layers. The risk of having a defect located at the same site in the second layer as in the first layer, that is above the defect in the first layer, is very insignificant, and if a third layer is applied the risk of all three layers having defects located upon each other such that a defect extending through the total thickness of the coating would appear is further reduced. By such a plural layer coating a high resistance against chemical, physical and mechanical affection on the component is obtained.

According to one embodiment of the invention, adjacent layers have a different structure. This may be accomplished by varying at least one of the deposition conditions and deposition methods of adjacent layers of the coating and by treating some of the deposited layers by means of, for example, heat treatment. The structure difference between adjacent layers implies that an overlaying layer covers defects in an underlying layer better. Structure differences of layers also result in differences as to the sort of defect in the layer, as well as to the presence of defects. Therefore, it is possible to combine different structures of adjacent layers in such a way that the risk of a formation of a defect extending through the total thickness of the coating is further decreased.

According another embodiment of the invention, adjacent layers have a different composition, that is the weight -or amount proportion between compounds or elements included in a layer are different for adjacent layers. In a coating with layers that comprise titanium carbon nitride (TiCN), for instance, the proportion between titanium (Ti), coal (C) and nitrogen (N) in the layers of adjacent layers varies. The difference as to composition of adjacent layers is accomplished by varying the composition of the compounds deposited on the surface of the component. The difference as to the composition of adjacent layers implies that an overlaying layer covers defects in an underlying layer better. Differences as to the composition of layers also result in differences as to the sort of defects in the layer, as well as to the amount of defects. It is also possible to combine different compositions in adjacent layers in such a way that the risk of a defect extending through the total thickness of the coating is further reduced.

According to another embodiment of the invention adjacent layers comprise different materials. Thanks to different layer materials being able to present different sorts of defects, this further decreases the risk of defects extending through the total thickness of the coating being formed. The risk that a defect of a second layer, located upon the first layer, is formed at the same site as the defect of the first layer is therefore reduced.

According to another embodiment of the invention the coating comprises at least one layer which comprises at least one ceramic material. This results in an increased wear resistance and resistance against corrosion, oxidation and hydration of the coating in comparison with a coating not comprising any ceramic material.

According to one embodiment of the invention, the very outer layer of the coating comprises at least one ceramic material. This results in an increased wear resistance and resistance against corrosion, oxidation and hydration in comparison with a coating not comprising any ceramic material as its outer layer.

According to another embodiment of the invention, each non-ceramic layer of the coating adjoins a ceramic layer. This has a positive effect on the wear resistance and the resistance against corrosion, oxidation and hydration.

According to another embodiment of the invention, the coating is comprised by at least four layers. The risk of the coating having defects that extend through the total thickness being significantly reduced as it is comprised by four layers.

According to another embodiment of the invention each layer comprises one or more of the materials titanium (Ti), titanium nitride (TiN), titanium dioxide (TiO₂), titanium carbon nitride (TiCN), titanium aluminium nitride (TiAlN), zirkonium dioxide (ZrO₂), zirkonium nitride (ZrN) and diamond-like coal (DLC). All these materials absorb only small amounts of neutrons and have a good wear resistance and are, thus, suitable materials in nuclear plants.

According to one application of the invention, the coating comprises alternating layers of titanium and titanium nitride. This combination has turned out to result in a coating with a good resistance against oxygen and hydrogen diffusion.

According to another embodiment of the invention, the coating has a total thickness of 20 µm at maximum. Such a thickness is possible without the coating absorbing too large amounts of neutrons when the coating comprises layers of diamond-like coal, as this is a material which has a very low neutron absorption.

According to another embodiment of the invention the coating has a total thickness of 10 µm at maximum. Such a thickness is possible for coatings comprising two or more of the materials defined above, without the coatings absorbing too large amounts of neutrons. According to another embodiment of the invention the coating has a total thickness of 5 µm at maximum.

According to one application of the present invention the component is made of or has a surface of a zirkonium-based material. According to another application of the invention the component is made of or has a surface of stainless steel. According to another application of the invention the component is made of or has a surface of titanium. Zirkonium-based materials, stainless steel and titanium are materials often appearing in components in nuclear plants. Therefore, it is important to produce wear resistant, impermeable and well covering coatings on the surface of components made of these materials in order to prevent the appearance of damages caused by wear, corrosion, oxidation and/or hydration of the component.

The provision of the above coating is obtained by means of the method initially defined, which is characterized in that the coating is deposited onto the surface as layers located onto each other, that each layer is deposited by means of a vapor deposition method and that the total thickness of the coating is 20 µm at maximum. Thanks to the vapor deposition it is possible to deposit thin layers with few defects on surfaces of components. This, in its turn, makes it possible to obtain thin coatings, which is a necessity if the neutron absorption is to be low and the risk of scaling of the coating is to be insignificant.

According to one embodiment of the method of the invention at least one of the layers is deposited onto the surface of the component by means of a PVD-method (physical, vapor deposition method). According to one application of the invention at least one of the layers is deposited onto the surface by means of reactive or non-reactive sputtering. According to another application of the invention at least one of the layers is deposited onto the surface by means of reactive or non-reactive ion plating. According to another application of the invention at least one of the layers is deposited onto the surface by means of reactive or non-reactive evaporation.

According to another embodiment of the method of the invention at least one of the layers is deposited by means of a CVD-method (chemical vapor deposition method).

According to another embodiment of the method of the invention the coating is deposited as at least two layers in such a way that adjacent layers have different structures. According to an application of the method of the invention the coating is deposited as at least two layers in such a way that adjacent layers have a different composition. By an application of the invention the coating is deposited as at least two layers in such a way that adjacent layers comprise different materials.

According to another embodiment of the invention the coating is deposited in such a way that it comprises at least one layer that comprises at least one ceramic material. According to one application of the method of the invention the coating is deposited in such a way that the very outer layer comprises at least one ceramic material. According to another application of the method of the invention the coating is deposited in such a way that each non-ceramic layer is adjacent to a ceramic layer.

By one application of the invention the coating is deposited as at least four layers.

According to one embodiment of the method of invention the coating is deposited in such a way that each layer comprises at least one of the materials titanium (Ti), titanium nitride (TiN), titanium dioxide (TiO₂), titanium carbon nitride (TiCN), titanium aluminium nitride (TiAlN), zirkonium dioxide (ZrO₂), zirkonium nitride (ZrN) and diamond-like coal (DLC). By an application of the method according to the invention the coating is deposited in such a way that it comprises alternating layers of titanium and titanium nitride.

According to one application of the method according to the invention the coating is deposited in such a way that the total thickness of the coating becomes 20 µm at maximum. According to another application of the method according to the invention the coating is deposited in such a way that the total thickness of the coating becomes 10 µm at maximum. At another application of the method according to the invention the coating is deposited in such a way that the total thickness of the coating becomes 5 µm at maximum.

According to one embodiment of the method of the invention the coating is deposited onto a surface of a zirkonium-based material. By an application of the inventive method the coating is deposited onto a surface of stainless steel. By another application of the method of the invention the coating is deposited onto a surface of titanium.

The object defined above is also obtained by a use where such a component is arranged in a light water reactor.

### BRIEF DESCRIPTION OF THE DRAWINGS

The present invention will now be described more in detail with reference to the embodiments shown in the enclosed drawings.
- Fig 1: shows a schematic sectional view of a component comprising a surface which presents a coating according to the invention, said coating being comprised by a plurality of layers.
- Fig 2: shows a schematic sectional view of a component comprising a surface which presents a coating according to prior art, said coating being comprised by one single layer.
- Fig 3: shows a schematic sectional view of a component comprising a surface which presents a coating according to the invention, said coating being comprised by alternating layers of two different materials.
- Fig 4: shows a schematic sectional view of a component comprising a surface which presents a coating according to the invention, said coating being comprised by alternating layers comprising three different materials.

### DETAILED DESCRIPTION OF EMBODIMENTS

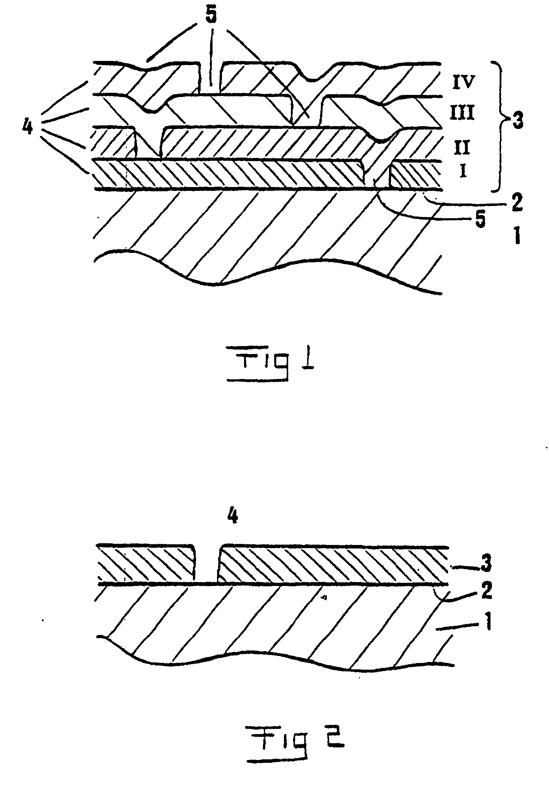

In Fig 1 a part of a component 1 which is arranged in a light water reactor and the surface 2 of which presents a coating 3 is shown. By use in a light water reactor the coating 3 is in contact with water or a combination of water and water steam. The coating 3 has as its task to protect the surface 2 against damages caused by oxidation, hydration, corrosion and/or wear. The coating 3 is comprised by a plurality of layers 4 located upon each other. Possibly existing defects 5 in the layer I located closest to the surface 2 will be covered by a second layer II during deposition of the second layer. In this case this means that the coating 3 does not comprise any defects 5 that extend through the total thickness of the coating 3. If that would be the case, the coating 3 would not provide a protection for the surface 2 at these areas of defects 5, which surface thereby would be damaged by oxidation, hydration and corrosion in these areas caused by the contact between the surface 2 and the water, water steam or the combination thereof. By significant defects 5 that extend through the total thickness of the coating 3 the surface 2 would also be damaged by wear at these areas. The probability of the layer II having a defect 5 located right above the defect 5 in the layer 1 is very small. If another layer III is deposited upon the layer II the probability is even more insignificant that defects 5 would be located above each other in the layers II and III, and result in a defect 5 that extend through the total thickness of the coating III. The number of layers located upon each other may vary and may for instance be 3, 4, 6 or 10.

Adjacent layers 4 in the coating 3 may also have different structures or compositions and/or be constituted by different materials. This also counteracts the formation of similar defects in adjacent layers 4, thereby further reducing the risk of formation of defects 5 that extend through the total thickness of the coating 3.

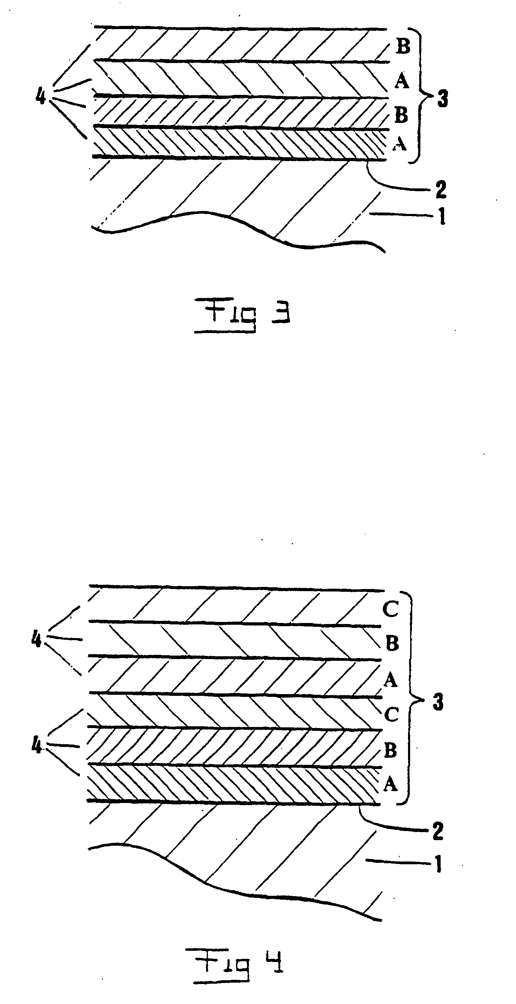

In Fig 2 a component 1 according to prior art is shown, the surface 2 thereof being covered by a coating 3. During use in a light water reactor the coating 3 is in contact with water or a combination of water and water steam and has as its task to protect the surface 2 against damages resulting from oxidation, hydration, corrosion and wear. Possibly existing defects 4 in the coating 3 will result in a defect 4 extending through the total thickness of the coating 3 as the coating 3 is only comprised by one layer. This means that a presence of defects 4 in the coating 3 results in the coating 3 not being able to protect the surface 2 against a contact with the water or a combination of the water and the water steam by the area of the defects 4, resulting in damages on the surface 2. By means of prior art it is not possible to produce coatings that are completely free from defects. Neither is it possible to inhibit the appearance of defects 4 extending through the total thickness of the coating 3 by only increasing the thickness of the coating 3. The reason thereto is that thick coatings, as has been told earlier, result in an increased risk of scaling of the coating and an increased absorption of neutrons when the coating is in the nearness of the nuclear fuel. This means that coatings 3 of prior art are not able to protect the surface 2 against damages.

In Fig 3 a component 1 in a light water reactor is shown, the surface 2 of which is covered by a coating 3. During use in a light water reactor, the coating 3 is in contact with water or a combination of water and water steam and has as its task to protect the surface 2 against this water or this combination of water and water steam and against wear. The coating 3 is comprised by layers located upon each other, said layers having different structures or compositions or being comprised by different materials. Closest to the surface 2 a layer 4 comprised by a material A is located. Upon this material A a layer 4 comprised by a material B is located. This material is covered by a layer 4 comprised by the first material A. Thereafter a layer 4 comprised by the second material B follows. This AB-provision of the layers 4 may be comprised by a small number of layers, for instance one layer of each of the materials A and B, that is two layers in total, as well as a larger number of layers.

Fig 4 shows a component 1 in a light water reactor 2, the surface 2 of which is coated with a coating 3. During use, the coating 3 is in contact with water or a combination of water and water steam and has as its task to protect the surface 2 against this water or this combination of water and water steam and against wear. The coating 3 is comprised by a series of layers 4 of different materials A, B and C located on each other. These layers 4 are provided in such a way that the first layer 4 located closest to the surface 2 is comprised by a material A. The next layer 4, located upon the layer comprised by the material A, is comprised by the material B. The next layer 4, which is located on the layer comprised by the material B, is comprised by a material C. Upon this material a layer 4 comprised by the material A is located, and upon this layer a layer 4 comprised by the material B, and upon this layer a layer 4 comprised by the material C. This ABC-provision of the layers 4 in the coating 3 may comprise a small number of layers, for example one layer of each material A, B and C, that is three layers in total, as well as a larger number of layers.

The component told by the invention may for example be a component in a light water reactor of a PWR- or a BWR-type. According to one example the component in the light water reactor is constituted by a cladding tube for fuel and the coating according to the invention is then preferably deposited onto an outer surface of the cladding tube. According another example the component is constituted by a distance element, for example a spacer, and according to one example it is constituted by a fuel box.

Coatings comprised by a plurality of layers according to the invention are resistant to at least one of oxidation, hydration, corrosion and wear.

The coating is deposited by means of a method performed in such a way that the total thickness of the coating becomes 20 µm at most. Another method is performed in such a way that the total thickness of the coating becomes 10 µm at most. Another method is performed in such a way that the total thickness of the coating becomes 5 µm at most.

According to one method, the coating is deposited onto a surface of a zirkonium-based material. According to another method the coating is deposited onto a surface of stainless steel, while the coating according to another method is deposited onto a surface of titanium.

The water which is in contact with the component during use in a light water reactor is deionized water.

### EXAMPLE

A coating containing titanium nitride (TiN) and titanium (Ti) as two different layer materials and being comprised by five to ten layers was provided onto a surface of zircaloy-4. The coating was tested with reference to hydrogen and oxygen diffusion as the sample was autoclaved for 80 days in pure water at 360° C. The result showed that the hydrogen absorption and the weight increase was significantly lower for the sample provided with the plural layer coating of titanium nitride and titanium than for the undeposited reference sample of zircaloy-4.

An inspection of the cross-section of the sample showed that the number of sites where zirkonium dioxide (ZrO₂) had been formed beneath the coating was significantly lower for a plural layer coating of titanium nitride and titanium than for a coating comprised by one single layer of titanium nitride. The reason for this was that the number of defects extending through the total thickness of the coating and acting as diffusion ways for oxygen and hydrogen did decrease with a plural layer coating.

## Claims

1. A component designed for use in a light water nuclear reactor and which, during the use thereof, is in contact with water, water steam or a combination thereof, the component at least partly being comprised by a metal and/or a metal alloy, and the surface (2) of the component being provided with a thin coating (3) provided to prevent the water and/or the water steam from getting into contact with the metal and/or the metal alloy, **characterized in that** the coating comprises two or more layers (4) successively deposited, and that the coating (3) has a total thickness of 20 µm at maximum.

2. A component according to claim 1, **characterized in that** adjacent layers (4) have different structures.

3. A component according to any one of claims 1 or 2, **characterized in that** adjacent layers (4) have different compositions.

4. A component according to any one of the preceding claims, **characterized in that** adjacent layers (4) comprise different materials.

5. A component according to any one of the preceding claims, **characterized in that** the coating (3) comprises at least one layer (4) which comprises at least one ceramic material.

6. A component according to claim 5, **characterized in that** the very outer layer (4) of the coating (3) comprises at least one ceramic material.

7. A component according to any one of claims 5 and 6, **characterized in that** each non-ceramic layer of the coating adjoins a ceramic layer.

8. A component according to any one of the preceding claims, **characterized in that** the coating (3) is comprised by at least four layers (4).

9. A component according to any of the preceding claims, **characterized in that** each layer (4) comprises one or more of the materials titanium (Ti), titanium nitride (TiN), titanium dioxide (TiO₂), titanium carbon nitride (TiCN), titanium aluminium nitride (TiAlN), zirkonium dioxide (ZrO₂), zirkonium nitride (ZrN) and diamond-like coal (DLC).

10. A component according to any one of the preceding claims, **characterized in that** the coating (3) comprises alternating layers (4) of titanium (Ti) and titanium nitride (TiN).

11. A component according to any one of the preceding claims, **characterized in that** the coating (3) has a total thickness of 10 µm at maximum.

12. A component according to any one the preceding claims, **characterized in that** the coating (3) has a total thickness of 5 µm at maximum.

13. A component according to any one of the preceding claims, **characterized in that** the component is made of or has a surface of a zirkonium-based material.

14. A component according to claim 1 to 12, **characterized in that** the component is made of or has a surface of stainless steel.

15. A component according to claims 1 to 12, **characterized in that** the component is made of or has a surface of titanium.

16. A method of producing a thin coating on a surface of a component designed for use in a light water nuclear reactor, the component at least partly being comprised by a metal and/or a metal alloy, the coating being provided to prevent water, water steam, or a combination thereof from getting in contact with the metal and/or the metal alloy during the use, **characterized in that** the coating is deposited onto the surface as layers arranged upon each other, and that each layer is deposited by means of a vapor deposition method, and that the total thickness of the coating is 20 µm at maximum.

17. A method according to claim 16, **characterized in that** at least one of the layers is deposited onto the surface by means of a PVD-method.

18. A method according to any one of claims 16 and 17, **characterized in that** at least one of the layers is deposited onto the surface by means of reactive or non-reactive sputtering.

19. A method according to any one of claims 16 and 17, **characterized in that** at least one of the layers is deposited onto the surface by means of reactive or non-reactive ion plating.

20. A method according to any one of claims 16 and 17, **characterized in that** at least one of the layers is deposited by means of reactive or non-reactive evaporation.

21. A method according to claim 16, **characterized in that** at least one of the layers is deposited onto the surface by means of a CVD-method.

22. A method according to any one of claims 16 to 21, **characterized in that** the coating is deposited as at least two layers in such a way that adjacent layers have a different structure.

23. A method according to any one of claims 16 to 22, **characterized in that** the coating is deposited as at least two layers in such a way that adjacent layers have a different composition.

24. A method according to any one of claims 16 to 23, **characterized in that** the coating is deposited in such a way that adjacent layers comprise different materials.

25. A method according to any one of claims 16 to 24, **characterized in that** the coating is deposited in such a way that it comprises at least one layer comprising at least one ceramic material.

26. A method according to claim 26, **characterized in that** the coating is deposited in such a way that the very outer layer comprises at least one ceramic material.

27. A method according to any one of claims 25 and 26, **characterized in that** the coating is deposited in such a way that each non-ceramic layer is adjacent to a ceramic layer.

28. A method according to any one of claims 16 to 27, **characterized in that** the coating is deposited as at least four layers.

29. A method according to any one of claims 16 to 28, **characterized in that** the coating is deposited in such a way that each layer comprises at least one of the materials titanium (Ti), titanium nitride (TiN), titanium dioxide (TiO₂), titanium carbon nitride (TiCN), titanium aluminium nitride (TiAIN), zirkonium dioxide (ZrO₂), zirkonium nitride (ZrN) and diamond-like coal (DLC).

30. A method according to any one of claims 16 to 29, **characterized in that** the coating is deposited in such a way that it comprises alternating layers of titanium (Ti) and titanium nitride (TiN).

31. Use of a component according to any one of claims 1 to 15, **characterized in that** the component is arranged in a light water nuclear reactor.

## Patentansprüche

1. Bauteil zur Verwendung in einem Leichtwasserkernreaktor, welches Bauteil während seines Gebrauchs in Kontakt mit Wasser, Wasserdampf oder einer Kombination aus beiden steht, wobei das Bauteil mindestens teilweise aus einem Metall und/oder einer Metalllegierung besteht und die Oberfläche (2) des Bauteils mit einem dünnen Belag (3) versehen ist, um zu verhindern, daß Wasser und/oder Wasserdampf in Kontakt mit dem Metall und/oder der Metallegierung gelangt, **dadurch gekennzeichnet, daß** der Belag aus zwei oder mehr nacheinander aufgebrachten Schichten (4) besteht und daß der Belag (3) eine Gesamtdicke von maximal 20 µm hat.

2. Bauteil nach Anspruch 1, **dadurch gekennzeichnet, daß** benachbarte Schichten (4) unterschiedliche Gefüge (Strukturen) haben.

3. Bauteil nach einem der Ansprüche 1 oder 2, **dadurch gekennzeichnet, daß** benachbarte Schichten (4) unterschiedliche Zusammensetzungen haben.

4. Bauteil nach einem der vorhergehenden Ansprüche, **dadurch gekennzeichnet, daß** benachbarte Schichten (4) aus unterschiedlichen Materialien bestehen.

5. Bauteil nach einem der vorhergehenden Ansprüche, **dadurch gekennzeichnet, daß** der Belag (3) mindestens eine Schicht (4) enthält, die mindestens ein keramisches Material enthält.

6. Bauteil nach Anspruch 5, **dadurch gekennzeichnet, daß** die äußerste Schicht (4) des Belages (3) mindestens ein keramisches Material enthält.

7. Bauteil nach einem der Ansprüche 5 und 6, **dadurch gekennzeichnet, daß** jede nicht keramische Schicht des Belages an eine keramische Schicht grenzt.

8. Bauteil nach einem der vorhergehenden Ansprüche, **dadurch gekennzeichnet, daß** der Belag (3) mindestens vier Schichten (4) enthält.

9. Bauteil nach einem der vorhergehenden Ansprüche, **dadurch gekennzeichnet, daß** jede Schicht (4) eines oder meherere der Materialien Titan (Ti), Titannitrid (TiN), Titandioxid (TiO₂), Titankohlenstoffnitrid (TiCN), Titanaluminiumnitrid (TiAIN), Zirkoniumdioxid (ZrO₂), Zirkoniumnitrid (ZrN) und diamantene Kohle (DLC) enthält.

10. Bauteil nach einem der vorhergehenden Ansprüche, **dadurch gekennzeichnet, daß** der Belag (3) abwechselnd Schichten (4) aus Titan (Ti) und Titannitrid (TiN) enthält.

11. Bauteil nach einem der vorhergehenden Ansprüche, **dadurch gekennzeichnet, daß** der Belag (3) höchstens eine Gesamtdicke von 10 µm hat.

12. Bauteil nach einem der vorhergehenden Ansprüche, **dadurch gekennzeichnet, daß** der Belag (3) höchstens eine Dicke von 5 µm hat.

13. Bauteil nach einem der vorhergehenden Ansprüche, **dadurch gekennzeichnet, daß** das Bauteil aus einer Zirkoniumlegierung besteht oder eine Oberfläche aus einer Zirkoniumlegierung hat.

14. Bauteil nach einem der Ansprüche 1 bis 12, **dadurch gekennzeichnet, daß** das Bauteil aus rostfreiem Stahl besteht oder eine Oberfläche aus rostfreiem Stahl hat.

15. Bauteil nach einem der Ansprüche 1 bis 12, **dadurch gekennzeichnet, daß** das Bauteil aus Titan besteht oder eine Oberfläche aus Titan hat.

16. Verfahren zur Herstellung eines dünnen Belages auf der Oberfläche eines Bauteils, welches zur Verwendung in einem Leichtwasserkernreaktor bestimmt ist, wobei das Bauteil mindestens teilweise aus einem Metall und/oder einer Metallegierung besteht und der Belag vorgesehen ist zu verhindern, daß Wasser, Wasserdampf oder eine Kombination aus beiden in Kontakt mit dem Metall und/oder der Metallegierung während der Benutzung gelangt, **dadurch gekennzeichnet, daß** der Belag auf der Oberfläche in Form von übereinander liegenden Schichten aufgebracht ist und daß jede Schicht durch ein Aufdampf-Verfahren aufgebracht ist und daß die Gesamtdicke des Belages höchstens 20 µm beträgt.

17. Verfahren nach Anspruch 16, **dadurch gekennzeichnet, daß** mindestens eine der Schichten auf der Oberfläche mittels eines PVD-Verfahrens aufgebracht wird.

18. Verfahren nach einem der Ansprüche 16 und 17, **dadurch gekennzeichnet, daß** mindestens eine der Schichten mittels reaktiver oder nicht-reaktiver Zerstäubung auf die Oberfläche aufgebracht wird.

19. Verfahren nach einem der Ansprüche 16 und 17, **dadurch gekennzeichnet, daß** mindestens eine der Schichten mittels reaktiver oder nicht-reaktiver Metallisierung (Galvanisierung) auf die Oberfläche aufgebracht wird.

20. Verfahren nach einem der Ansprüche 16 und 17, **dadurch gekennzeichnet, daß** mindestens eine der Schichten mittels reaktiver oder nicht-reaktiver Verdampfung auf die Oberfläche aufgebracht wird.

21. Verfahren nach Anspruch 16, **dadurch gekennzeichnet, daß** mindestens eine der Schichten auf der Oberfläche mittels eines CVD-Verfahrens aufgebracht werden.

22. Verfahren nach einem der Ansprüche 16 bis 21, **dadurch gekennzeichnet, daß** der Belag in mindestens zwei Schichten in der Weise aufgebracht wird, daß benachbarte Schichten eine unterschiedliche Struktur haben.

23. Verfahren nach einem der Ansprüche 16 bis 22, **dadurch gekennzeichnet, daß** der Belag in mindestens zwei Schichten in der Weise aufgebracht wird, daß benachbarte Schichten eine unterschiedliche Zusammensetzung haben.

24. Verfahren nach einem der Ansprüche 16 bis 23, **dadurch gekennzeichnet, daß** der Belag in der Weise aufgebracht wird, daß benachbarte Schichten aus unterschiedlichem Material bestehen.

25. Verfahren nach einem der Ansprüche 16 bis 24, **dadurch gekennzeichnet, daß** der Belag derart aufgebracht wird, daß er mindestens eine Schicht enthält, die mindestens ein keramisches Material enthält.

26. Verfahren nach Anspruch 26, **dadurch gekennzeichnet, daß** der Belag in der Weise aufgebracht wird, daß die äußerste Schicht mindestens ein keramisches Material enthält.

27. Verfahren nach einem der Ansprüche 25 und 26, **dadurch gekennzeichnet, daß** der Belag in der Weise aufgebracht wird, daß jede nicht-kermamische Schicht einer keramischen Schicht benachbart ist.

28. Verfahren nach einem der Ansprüche 16 bis 27, **dadurch gekennzeichnet, daß** der Belag in mindestens vier Schichten aufgebracht ist.

29. Verfahren nach einem der Ansprüche 16 bis 28, **dadurch gekennzeichnet, daß** der Belag in der Weise aufgebracht ist, daß jede Schicht mindestens eines der Materialien Titan (Ti), Titannitrid (TiN), Titandioxid (TiO₂), Titankohlenstoffnitrid (TiCN), Titanaluminiumnitrid (TiAIN), Zirkoniumdioxid (ZrO₂), Zirkoniumnitrid (ZrN) und diamantene Kohle (DLC) enthält.

30. Verfahren nach einem der Ansprüche 16 bis 29, **dadurch gekennzeichnet, daß** der Belag in der Weise aufgebracht ist, daß er abwechselnd Schichten aus Titan (Ti) und Titannitrid (TiN) enthält.

31. Verwendung eines Bauteils nach einem der Ansprüche 1 bis 15, **dadurch gekennzeichnet, daß** das Bauteil in einem Leichtwasserkernreaktor angeordnet ist.

## Revendications

1. Elément destiné à être utilisé dans un réacteur nucléaire à eau légère et qui, pendant son utilisation, est en contact avec de l'eau, de la vapeur d'eau ou l'une de leurs combinaisons, l'élément étant constitué au moins en partie d'un métal et/ou d'un alliage métallique, et la surface (2) de l'élément étant munie d'un revêtement (3) mince destiné à empêcher l'eau et/ou la vapeur d'eau de venir en contact avec le métal et/ou avec l'alliage métallique, **caractérisé en ce que** le revêtement comprend deux couches (4) ou plusieurs couches (4) déposées successivement, et **en ce que** le revêtement (3) a une épaisseur totale de 20 µm au maximum.

2. Elément suivant la revendication 1, **caractérisé en ce que** des couches (4) voisines ont des structures différentes.

3. Elément suivant l'une quelconque des revendications 1 ou 2, **caractérisé en ce que** les couches (4) voisines ont des compositions différentes.

4. Elément suivant l'une quelconque des revendications précédentes, **caractérisé en ce que** les couches (4) voisines comprennent des matières différentes.

5. Elément suivant l'une quelconque des revendications précédentes, **caractérisé en ce que** le revêtement (3) comprend au moins une couche (4) qui comprend au moins une matière céramique.

6. Elément suivant la revendication 5, **caractérisé en ce que** la couche (4) la plus extérieure de revêtement (3) comprend au moins une matière céramique.

7. Elément suivant l'une quelconque des revendications 5 et 6, **caractérisé en ce que** chaque couche non-céramique du revêtement est adjacente à une couche céramique.

8. Elément suivant l'une quelconque des revendications précédentes, **caractérisé en ce que** le revêtement (3) comprend au moins quatre couches (4).

9. Elément suivant l'une quelconque des revendications précédentes, **caractérisé en ce que** chaque couche (4) comprend une ou plusieurs des matières titane (Ti), nitrure de titane (TiN), dioxyde de titane (TiO₂), carbonitrure de titane (TiCN), nitrure de titane et d'aluminium (TiAIN), dioxyde de zirconium (ZrO₂), nitrure de zirconium (ZrN) et carbone de type diamant (CTC).

10. Elément suivant l'une quelconque des revendications précédentes, **caractérisé en ce que** le revêtement (3) comprend des couches (4) alternées de titane (Ti) et de nitrure de titane (TiN).

11. Elément suivant l'une quelconque des revendications précédentes, **caractérisé en ce que** le revêtement (3) a une épaisseur totale de 10 µm au maximum.

12. Elément suivant l'une quelconque des revendications précédentes, **caractérisé en ce que** le revêtement (3) a une épaisseur totale de 5 µm au maximum.

13. Elément suivant l'une quelconque des revendications précédentes, **caractérisé en ce que** l'élément est en une matière à base de zirconium ou a une surface en une matière à base de zirconium.

14. Elément suivant l'une des revendications 1 à 12 **caractérisé en ce que** l'élément est en acier inoxydable ou a une surface en acier inoxydable.

15. Elément suivant les revendications 1 à 12, **caractérisé en ce que** l'élément est en titane ou a une surface en titane.

16. Procédé de production d'un mince revêtement à la surface d'un élément destiné à être utilisé dans un réacteur nucléaire à eau légère, l'élément étant constitué au moins en partie d'un métal et/ou d'un alliage métallique, le revêtement étant prévu pour empêcher que de l'eau, de la vapeur d'eau où l'une de leurs combinaisons viennent en contact avec le métal et/ou avec l'alliage métallique en utilisation, **caractérisé en ce que** l'on dépose le revêtement sur la surface en couches disposées les unes au dessus des autres et **en ce que** l'on dépose chaque couche au moyen d'un procédé de dépôt en phase vapeur, et **en ce que** l'épaisseur totale du revêtement est de 20 µm au maximum.

17. Procédé suivant la revendication 16, **caractérisé en ce que** l'on dépose au moins l'une des couches sur la surface au moyen d'un procédé PVD.

18. Procédé suivant l'une quelconque des revendications 16 et 17, **caractérisé en ce que** l'on dépose au moins l'une des couches sur la surface au moyen d'une pulvérisation cathodique réactive ou non réactive.

19. procédé suivant l'une quelconque des revendications 16 et 17, **caractérisé en ce que** l'on dépose au moins l'une des couches sur la surface au moyen d'un plaquage d'ions réactif ou non réactif.

20. Procédé suivant l'une quelconque des revendications 16 et 17, **caractérisé en ce que** l'on dépose au moins l'une des couches au moyen d'une évaporation réactive ou non réactive.

21. Procédé suivant la revendication 16, **caractérisé en ce que** l'on dépose au moins l'une des couches sur la surface au moyen d'un procédé CVD.

22. Procédé suivant l'une quelconque des revendications 16 à 21, **caractérisé en ce que** l'on dépose le revêtement en au moins deux couches de façon à ce que des couches voisines aient une structure différente.

23. Procédé suivant l'une quelconque des revendications 16 à 22, **caractérisé en ce que** l'on dépose le revêtement en au moins deux couches de façon à ce que des couches voisines aient une composition différente.

24. Procédé suivant l'une quelconque des revendications 16 à 23, **caractérisé en ce que** l'on dépose le revêtement de façon à ce que les couches voisines comprennent des matières différentes

25. Procédé suivant l'une quelconque des revendications 16 à 24, **caractérisé en ce que** l'on dépose le revêtement de façon à ce qu'il comprenne au moins une couche ayant au moins une matière céramique.

26. Procédé suivant la revendication 25, **caractérisé en ce que** l'on dépose le revêtement de façon à ce que la couche la plus à l'extérieur comprenne au moins une matière céramique.

27. Procédé suivant l'une quelconque des revendications 25 et 26, **caractérisé en ce que** l'on dépose le revêtement de façon à ce que chaque couche non céramique soit voisine d'une couche céramique.

28. Procédé suivant l'une quelconque des revendications 16 à 27, **caractérisé en ce que** l'on dépose le revêtement en au moins quatre couches.

29. Procédé suivant l'une quelconque des revendications 16 à 28, **caractérisé en ce que** l'on dépose le revêtement de façon à ce que chaque couche comprenne au moins l'une des matières titane (Ti), nitrure de titane (TiN), dioxyde de titane (TiO₂), carbonitrure de titane (TiCN), nitrure de titane et d'aluminium (TiAIN), dioxyde de zirconium (ZrO₂), nitrure de zirconium (ZrN) et carbone de type diamant (CTC).

30. Procédé suivant l'une quelconque des revendications 16 à 29, **caractérisé en ce que** l'on dépose le revêtement de façon à ce qu'il comprenne des couches alternées de titane (Ti) et de nitrure de titane (TiN).

31. Utilisation d'un élément suivant l'une quelconque des revendications 1 à 15, **caractérisée en ce que** l'élément est placé dans un réacteur nucléaire à eau légère.
